# EUROPEAN PATENT APPLICATION

(11) **EP 4 645 010 A1**
(43) Date of publication of application: **05.11.2025**
(21) Application number: 24173159.5
(22) Date of filing: 29.04.2024
(51) Int. Cl.: G05B 19/418

(54) **GENERATION AND EXECUTION OF ADVANCED PLANS**

(71) Applicant: Siemens Aktiengesellschaft, 80333 München (DE)
(72) Inventor: Albrecht, Sebastian, 85399 Hallbergmoos (DE); Kast, Bernd, 89335 Ichenhausen (DE); Schürmann, Bastian, 81737 München (DE); Deroo, Frederik, 85399 Hallbergmoos (DE)
(74) Representative: Siemens Patent Attorneys

(57) **Abstract**

Embodiments of the present disclosure provide a method and system for planning and executing a workflow process of a manufacturing facility. The method may comprise receiving, from a user, a planning task describing the workflow process; generating, by a planning engine, based on the planning task, a nominal plan including a first plurality of procedures, wherein each procedure includes a predefined initial and final state; generating, by the planning engine, for each procedure of the first plurality of procedures in the nominal plan, a tolerance model defining acceptable deviations for each one of the predefined initial and final state; generating, by the planner engine, based on each tolerance model, at least one other plurality of procedures; and adding by the planner engine, the at least one other plurality of procedures to the nominal plan to generate an advanced plan. The method further comprises executing, by an execution engine, a first part of the advanced plan to perform the workflow process of the manufacturing facility; and continuously monitoring, by the execution engine, a current state of currently executed procedures in the first part of the advanced plan and potential state deviations of a second upcoming part of the advanced plan by predicting, in a receding horizon manner, whether the potential state deviations expected in the second upcoming part of the advanced plan are acceptable deviations.

## Description

### TECHNICAL FIELD

The non-limiting and exemplary embodiments of the present disclosure generally relate to the technical field of generation and execution of plans for performing workflow processes through machines of manufacturing facilities, and specifically to methods and systems for offline generation and online execution of plans.

### BACKGROUND

Generating workflows for flexible or even autonomous production facilities requires to plan a sequence of tasks with specified initial and final states. One can either generate a plan offline in advance and then only apply this plan later during production or one plans online during the actual production process based on the current state of the workflow. Both tasks have their own advantages and disadvantages. Motion planning, also path planning (also known as the navigation problem) is a computational problem to find a sequence of valid configurations that moves an object such as a robot or robotic arm from a source to a destination e.g., in a production facility. For example, consider navigating a robotic arm inside a building to pick an object at a starting position and place the object at a final location. It should execute this pick-and-place task while avoiding walls and other components in its immediate vicinity. A motion planning algorithm would take a description of such tasks as input, and produce, for example, the speed and turning commands sent to a robot's wheels, joints, arms, etc. For example, motion planning algorithms might address robots with a larger number of joints (e.g., industrial manipulators) that perform complex tasks (e.g., manipulation of objects), while having to deal with uncertainties (e.g., imperfect models of the environment or robot).

In planning a task for a workflow process e.g., for a manufacturing facility, as described above, offline planning might be preferred, as no time-consuming and computationally challenging online planning is required and since the conventional offline plans (i.e., nominal plans) can be inspected and checked by human operators beforehand. Therefore, there is no unexpected behaviour during execution of a nominal plan. However, a drawback arises when there are even minor deviations from the assumed initial or final states, as this prevents the safe execution of the plan, resulting in its termination. On the other hand, online planning is more flexible and robust to real-world situations because it is generated based on the current state and can replan if there are any deviations. However, online planning cannot be verified beforehand and requires costly planning during production. So, none of the two approaches is ideal. Currently, one must choose between the two approaches or manually script exception handling. When using an offline plan or a manually scripted workflow, it is necessary to anticipate possible error cases and define fallback strategies to react to these deviations. This approach requires a lot of experience, is error-prone, and often relies on trial-and-error, due to the difficulty of predicting all possible deviations beforehand. Since for a real system there is a vast number of possible errors, considering all of them is time-consuming.

WO2020/025103A1 discloses managing a digital structural information and digital processing information of a product to be manufactured or processed, generating a production graph that combines the structure and processing information for a specific product and available production modules, and generating processing sequences from the production graph that specify the steps required to manufacture or process the product.

WO2022/073913A1 discloses a method for planning a technical process, wherein the technical process has hierarchically structured tasks, and the technical process includes a modification of physical units. Further, dependency information of the hierarchically structured tasks is analysed, and parallelization options are derived from the dependency information.

Despite the availability of these general approaches (i.e., offline planning, online planning, hierarchical planning), there continues to be a need for improved approaches for generation and seamless execution of workflow processes in a manufacturing environment.

### SUMMARY

The invention is defined by the independent claims. Dependent claims describe embodiments thereof. This summary is provided to introduce a selection of concepts in a simplified form that are further described below in the detailed description. This summary is not intended to identify key features or essential features of the claimed subject matter, nor is it intended to be used to limit the scope of the claimed subject matter.

Embodiments of the present disclosure are generally directed to solutions that enable efficient generation and execution of improved nominal plans (i.e., advanced plans). One or more embodiments include a method implemented by a computing device. The method comprises receiving, for example, from a user, a planning task describing the workflow process executable by a control unit, generating based on the planning task a nominal plan including a first plurality of procedures, wherein each procedure includes a predefined initial and final state, generating for each procedure of the first plurality of procedures in the nominal plan a tolerance model defining acceptable deviations for each one of the predefined initial and final states, generating based on each tolerance model, at least one other plurality of procedures, and adding the at least one other plurality of procedures to the nominal plan to generate an advanced plan. By generating an advanced plan, advantages of offline generated plans (where no online optimization is needed and where the plans are known in advance) is combined with the flexibility of online planning to efficiently manage and compensate for real-world scenarios of workflow processes in manufacturing facilities. An advanced plan presents different strategies based on different acceptable tolerance models, and thus is able to compensate those acceptable deviations when later executing on manufacturing equipment.

One or more other embodiments include a method comprising executing a first part of an advanced plan to perform a workflow process via a control unit (e.g., of equipment in a facility). The method further comprises continuously monitoring a current state of currently executed procedures in the first part of the advanced plan and potential state deviations of a second upcoming part of the advanced plan by predicting, in a receding horizon manner, whether the potential state deviations expected in the second upcoming part of the advanced plan are acceptable deviations. Since the advanced plan already encodes a control strategy, there is no optimization of the control over the receding horizon that needs to be performed, but more of a check into the near future of parameters encoded in the advanced plan and how they compare to the tolerance models of the upcoming part of the advanced plan. Thus, having a simulation only for a limited horizon does not include any planning or optimization, is computationally cheap and can be done very fast and efficient.

In some embodiments, acceptable deviations comprise deviations from either the initial or the final state of each one of the procedures for which a plan is guaranteed to be successfully executed, and wherein the planning task includes one or more procedures to generate one or more preplanned fallback strategies. By considering acceptable deviations in the advanced plan, it is ensured later during an execution phase, that e.g., manufacturing equipment is actually allowed to successfully compensate the acceptable deviations through their own mechanics and/or control systems without stopping the workflow process. Moreover, by providing preplanned fallback strategies into the planning task, it is ensured that major damages resulting from major deviations of the manufacturing equipment are avoided.

In some embodiments, the nominal plan includes thresholds up to which acceptable deviations are compensable by the control unit in communication with equipment performing according to the workflow process, and wherein the thresholds are modelled by the tolerance models. Thus, an efficient and computationally cheap solution is provided that makes it possible for the system to explore different strategies during an execution phase.

In some embodiments, if the potential state deviations of the second upcoming part of the advanced plan are acceptable deviations, continue executing the advanced plan, and if the potential state deviations of the second upcoming part of the advanced plan are exceeding the acceptable deviations, executing one or more corresponding preplanned fallback strategies. By executing corresponding preplanned fallback strategies, major problems in e.g., a production line, can be avoided in cases of major deviations from the advanced plan.

In some embodiments, executing the first part of the advanced plan to perform the workflow process, comprises sending control commands to the control unit coupled to the equipment.

In some embodiments, continuously monitoring the current state of currently executed procedures in the first part of the advanced plan and potential state deviations of the second upcoming part of the advanced plan, comprises receiving from the control unit measurements of parameters of the equipment.

In some embodiments, the advanced plan comprises a different output structure than an output structure of the nominal plan.

In some embodiments, the pluralities of procedures comprise interconnected function blocks, FBs, relating input values to output values, the values being associated with and/or encoding the parameters of the equipment.

In some embodiments, generating the advanced plan comprises analysing deviations of input values and output values of each of the FBs in the nominal plan, checking whether the analysed deviations are acceptable deviations, if the analysed deviations are acceptable deviations, generating new FBs, and adding the new FBs between the FBs of the nominal plan to generate the advanced plan. Therefore, the new FBs incorporated into the nominal plan, provide different strategies according to the different acceptable deviations, thus providing a cheap and flexible alternative to the online planning approach.

Other embodiments include a system comprising a control unit, a plurality of machines coupled to the control unit and each configured to perform a plurality of workflow processing steps according to a workflow process executable by the control unit. The system further comprises one or more processors; and a memory, the memory storing computer-readable instructions that, when executed by one or more of the processors, cause the one or more of the processors to:
receive a planning task describing the workflow process;
generate, based on the planning task, a nominal plan including a first plurality of procedures, each procedure including a predefined initial and final state;
generate, for each procedure of the first plurality of procedures in the nominal plan, a tolerance model defining acceptable deviations for each one of the predefined initial and final states;
generate based on each tolerance model, at least one other plurality of procedures;
add the at least one other plurality of procedures to the nominal plan to generate an advanced plan;
execute a first part of the advanced plan to perform the workflow process; and
continuously monitor a current state of currently executed procedures in the first part of the advanced plan and potential state deviations of a second upcoming part of the advanced plan by predicting, in a receding horizon manner, whether the potential state deviations expected in the second upcoming part of the advanced plan are acceptable deviations.

In some embodiments, the instructions further cause the one or more of the processors to perform the steps of the method according to any one of the methods described above.

Other embodiments include a computer-readable storage medium storing instructions which when executed by at least one processor, cause the at least one processor to perform the method according to any one of the methods described above.

Other embodiments include a computer program product comprising instructions which when executed by at least one processor, cause the at least one processor to perform the method according to any one of the methods described above.

### BRIEF DESCRIPTION OF THE DRAWINGS

Aspects, features, and benefits of various embodiments of the present disclosure will become apparent, by way of example, from the following detailed description with reference to the accompanying drawings, in which like reference numerals or letters are used to designate like or equivalent elements. The drawings are illustrated for facilitating better understanding of the embodiments of the disclosure and not necessarily drawn to scale, in which:
- Figure 1A: is a schematic diagram illustrating offline and online planning, according to prior art.
- Figure 1B: is a schematic diagram illustrating offline planning with fallbacks, according to one or more embodiments of the present disclosure.
- Figure 2: is a schematic diagram illustrating an example system, according to one or more embodiments of the present disclosure.
- Figure 3: is a flow diagram illustrating an example method implemented by a computing device, according to one or more embodiments of the present disclosure.

### DETAILED DESCRIPTION

The embodiments of the present disclosure are described in detail with reference to the accompanying drawings. It should be understood that these embodiments are discussed only for the purpose of enabling those skilled persons in the art to better understand and thus implement the present disclosure, rather than suggesting any limitations on the scope of the present disclosure. Reference throughout this specification to features, advantages, or similar language does not imply that all the features and advantages that may be realized with the present disclosure should be or are in any single embodiment of the disclosure. Rather, language referring to the features and advantages is understood to mean that a specific feature, advantage, or characteristic described in connection with an embodiment is included in at least one embodiment of the present disclosure. Furthermore, the described features, advantages, and characteristics of the disclosure may be combined in any suitable manner in one or more embodiments. One skilled in the relevant art will recognize that the disclosure may be practiced without one or more of the specific features or advantages of a particular embodiment. In other instances, additional features and advantages may be recognized in certain embodiments that may not be present in all embodiments of the disclosure.

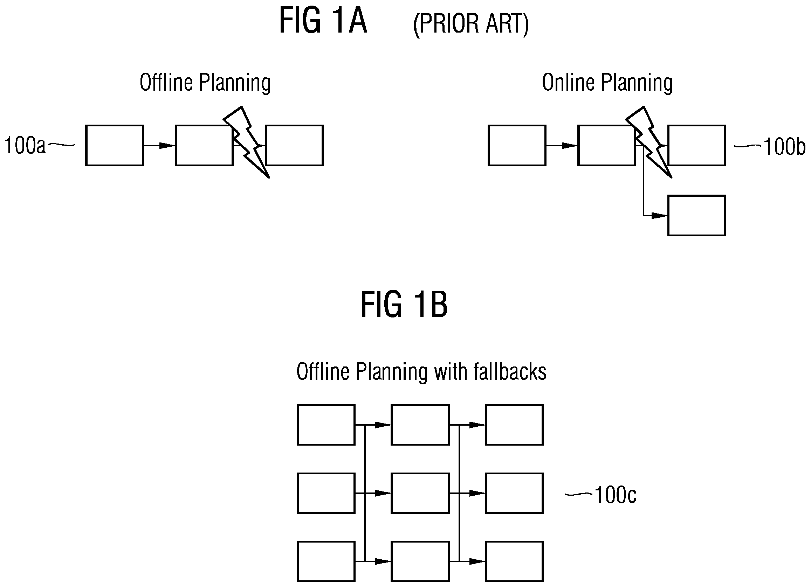

Figure 1A is a schematic diagram illustrating offline and online planning according to the prior art, wherein call function blocks (FBs) (100a, 100b) (e.g., of a control unit such as a Programmable Logic Controller, PLC) or procedures are illustrated for each approach. As described above, when using an offline planning approach, in the case of any deviation from the plan, the process stops, and an operator needs to intervene. The offline planning approach has the advantage that no computationally expensive online optimization is necessary, however it comes with a major drawback of not providing any mechanisms on how to react to errors/deviations on any kind. On the other hand, an online planning approach is more flexible and robust to real-world situations because it is generated based on the current state and the operator can react to errors and/or deviations and replan if there are any deviations that stop the execution of the plan. However, given the increased computational expenses (e.g., online optimization is required) and/or operating costs, neither of these approaches is ideal in real-world scenarios.

Figure 1B is schematic diagram illustrating offline planning with fallbacks, according to one or more embodiments of the present disclosure. During offline planning, the possibility of errors/deviations of a conventional plan (i.e., a nominal plan) are considered, and different strategies are generated to compensate those deviations, and thus an advanced plan is obtained that can later be executed by an execution engine. In a non-limiting example, the errors and/or deviations of the nominal plan can be obtained based on distributions, lookup tables, and/or simulations, used to model most probable errors and/or deviations for a type of plan/workflow of a manufacturing process over an execution period. Therefore, an advanced plan including the FBs (100c) extends the current mechanisms of (hierarchical) planning.

For simplicity, the plans depicted in Figures 1A-2 only depict some exemplary elements. In practice, plan may further include any additional elements suitable to describe a workflow process in a manufacturing facility.

An output format of the advanced plan is then generated in accordance with the execution engine. Normally, execution engines are fully procedurally structured (i.e., they call function blocks / procedures, FBs, and relate their output values to input values of other FBs without checking the properties of these values. Thus, checking the tolerances and deviations of inputs and outputs of the FBs (100a, 100b) means that dedicated new FBs are generated and added to the nominal plan. This means that between standard FBs (100a, 100b) multiple new FBs are added for each input and output to generate the FBs (100c) of the advanced plan. This way, the output structure of the advanced plan is different from the nominal plan's structure, since it contains all kinds of different paths/strategies corresponding to different deviations. The advanced plan can then be checked and edited by a human worker.

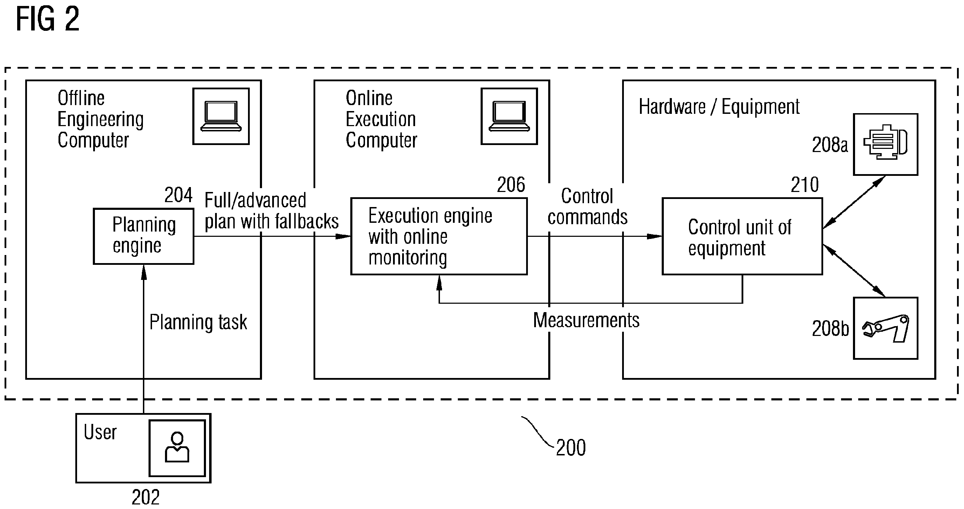

Figure 2 schematically shows an architecture of a system (200) for planning and executing a workflow process through one or more control units (e.g., PLCs), for example a control unit (210), of an equipment, for example manufacturing equipment (208a, 208b) (e.g., motors, conveyors, robotic arms, robots, etc.) in a facility (e.g., a manufacturing facility, a servicing facility, a research facility, etc.) according to an embodiment of the present disclosure. A user (202) (e.g., a human worker/operator), may provide a planning task to a planning engine (204) of an offline engineering computer. For example, the planning task may include specifications including operators, procedures, facts, measures and/or goals to be achieved by the manufacturing facility after execution of an associated plan. The planning engine (204) may generate based on the specifications of the planning task, a nominal plan including a plurality of procedures. For example, the procedures can include predefined initial and final states. Further, the planning engine (204) may include in the nominal plan one or more corresponding preplanned fallback strategies for cases where errors and/or deviations from the nominal plan are meeting or exceeding threshold of, for example, scripted exception handlings provided with the planning task. The planning engine (204) may also consider during offline planning, the possibility of errors/deviations of the nominal plan and may generate different strategies/procedures to compensate for those deviations. Thus, the planning engine (204) may reason about possible situations that can lead to problems in each procedure of the nominal plan. Further, the planning engine (204) may associate corresponding explicit tolerance models defining acceptable deviations for each one of the initial and final states of each of the procedures in the nominal plan. For example, the planning engine (204) analyses tolerances and deviations of input and output values of the FBs of the nominal plan and based on the analysis it may generate dedicated new FBs to be added between the FBs of the nominal plan to obtain an advanced plan. The input and output values to the FBs may be associated with and/or encoded with parameters of the manufacturing equipment (208a, 208b) of the manufacturing facility. This way, an output structure of the advanced plan is different from the nominal plan's structure, since it contains all kinds of different paths/strategies corresponding to different deviations. For example, acceptable deviations may comprise deviations from either the initial or the final state of each one of the procedures for which the advanced plan is guaranteed to be successfully executed. Further, the advanced plan may include thresholds up to which acceptable deviations are compensable by the manufacturing equipment (208a, 208b) performing according to the workflow process of the manufacturing facility, and wherein the thresholds may be modelled by the tolerance models. The advanced plan can then be checked and edited by the user (202).

The planning engine (204) may send the advanced plan including the fallback strategies to an execution engine (206) of an online execution computer. The execution engine (206) is configured to send control commands based on the advanced plan to the control unit (210) of the manufacturing equipment (208a, 208b) and thus execute the advanced plan, and further continuously monitor, in an online fashion, measurements of parameters of the manufacturing equipment (208a, 208b) (via the control unit (210)) in order to detect any deviations from the advanced plan.

For example, for discrete errors and/or deviations detected based on measurements (e.g., in a situation in which an object is not grasped at all by a robotic arm), the corresponding preplanned fallback strategies of the nominal plan, which are available also in the advanced plan, could bring the system back to a planned state at execution time. In the case of measured errors and/or deviations in continuous variables of the manufacturing equipment (208a, 208b) (e.g., in a case where an initial position of a part is translated and/or rotated in a certain dimension by the robotic arm) the execution engine (206) measuring the parameters of the manufacturing equipment (208a, 208b) may distinguish between two cases: (1) there are only minor measurement errors/deviations, which are within tolerances specified by the tolerance models corresponding to FBs of the advanced plan and thus are compensable; (2) the measured deviations of the parameters exceed the tolerance models in the advanced plan and give raise to actual exceptions/error cases in the execution. The latter case is similar to the discrete error case.

If a conventional execution engine only naively compares (without the mechanisms of tolerance models of the present disclosure) the actual initial state with the desired initial state or even the actual states during execution with the desired states from the offline planning, any deviation could cause an execution stop. However, from a hardware perspective of the manufacturing equipment (208a, 208b), such acceptable deviations might not present a problem since mechanics/control systems of the manufacturing equipment (208a, 208b) could compensate for it. Therefore, one needs to allow such cases for any manufacturing equipment (208a, 208b), in that the planning engine (204) may be able to generate plan templates which include thresholds up to which errors and deviations can be safely compensated through mechanics/control of the manufacturing equipment (208a, 208b), while the execution engine (206) monitors the type of errors/deviations and ensures that the advanced plan is still feasible.

For example, during online execution, deviations from an expected behaviour are monitored by the execution engine (206) using a receding horizon simulation. Therefore, the execution engine (206) can execute the advanced plan and react to measured deviations without the need to do a conventional online planning. This is achieved, by not only executing the current FBs in the advanced plan, but also by evaluating upcoming parts of the advanced plan (in simulation) to ensure plan feasibility in a receding horizon manner. For example, the execution engine (206) checks in parallel whether for a certain number of steps into the future and based on the measured deviations, a piece of manufacturing equipment (e.g., a robotic arm) stays on a feasible plan, i.e., whether a grasping of an object/part is feasible. Since FBs of the advanced plan already encode a control strategy, there is no optimization of the control over the receding horizon that needs to be performed, but more of a check into the near future of the parameters and how they compare to the tolerance models of the FBs in an upcoming part of the advanced plan. Since an error in, e.g., the velocity of a robotic arm might lead to a drift in a final position where a part is to be grabbed, the receding horizon simulation dynamically accounts for these subsequent effects, i.e., it makes sure the final position is reached by the robotic arm, which is impossible with conventional static/offline planning. Since the simulation is only for a limited horizon and does not include any planning or optimization, it is computationally cheap and can be done very fast and efficient. If there is a discrete error/deviation or if the simulation reveals that the deviations might be too large, one or more of the corresponding preplanned fallback strategies is executed to bring back the system to a planned state.

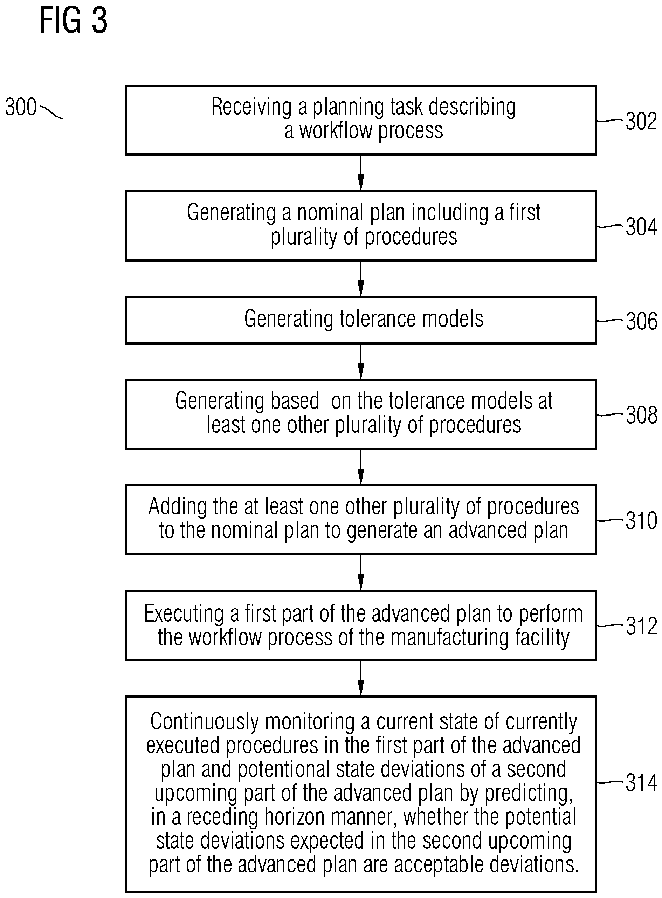

In view of all the above, particular embodiments of the present disclosure include a method (300) implemented by a computing device, as illustrated in Figure 3. In step 302, a planning task describing the workflow process is received from a user. Step 304 comprises generating, by one or more processors of a planning engine, based on the planning task, a nominal plan including a first plurality of procedures, each procedure including a predefined initial and final state. Step 306 includes generating, by the one or more processors of the planning engine, for each procedure of the first plurality of procedures in the nominal plan, a tolerance model defining acceptable deviations for each one of the predefined initial and final states. In step 308, at least one other plurality of procedures is generated by the one or more processors of the planner engine, based on each tolerance model. Step 310 comprises adding, by the one or more processors of the planner engine, the at least one other plurality of procedures to the nominal plan to generate an advanced plan. Further, step 312 comprises executing, by one or more processors of an execution engine, a first part of the advanced plan to perform the workflow process of the manufacturing facility. Finally, in step 314 the one or more processors of the execution engine are configured to continuously monitor a current state of currently executed procedures in the first part of the advanced plan and potential state deviations of a second upcoming part of the advanced plan by predicting, in a receding horizon manner, whether the potential state deviations expected in the second upcoming part of the advanced plan are acceptable deviations.

In one example configuration, the system (200) may include at least one processing unit (or processor) and memory. The processor may comprise one or more microprocessors, microcontrollers, hardware circuits, discrete logic circuits, hardware registers, digital signal processors (DSPs), field-programmable gate arrays (FPGAs), application-specific integrated circuits (ASICs), programmable logic controllers (PLCs) or a combination thereof. For example, the processor and memory unit may be incorporated into the system (200) or may be a computer or computer communicatively linked thereto such as the offline engineering computer and/or the online execution computer depicted in Figure 2. The processor may be programmable hardware capable of executing software instructions stored (to plan, generate, and executing workflow processes or otherwise perform the method described herein), e.g., as a machine-readable computer program in the memory. The memory may comprise any non-transitory machine-readable media known in the art or that may be developed, whether volatile or non-volatile, including but not limited to solid state media (e.g., SRAM, DRAM, DDRAM, ROM, PROM, EPROM, flash memory, solid state drive, etc.). Further, the system (200) may also include storage devices including, but not limited to removable storage devices (e.g., Secure Digital (SD) card, miniSD card, microSD card, memory stick, thumb-drive, USB flash drive, ROM cartridge, Universal Media Disc), fixed drive (e.g., magnetic hard disk drive), or the like, wholly or in any combination. Similarly, the system 100 may also have input device(s) such as keyboard, mouse, pen, voice input, etc. and/or output device(s) such as a display, speakers, printer, etc. Also included in the system (200) may be one or more communication connections, such as LAN, WAN, point to point, etc. In embodiments, the connections may be operable to facilitate point-to-point communications, connection-oriented communications, connectionless communications, etc. The system (200) may further include interface circuitry configured to control input and output (I/O) data paths of the system (200). For example, such I/O data paths may include data paths for receiving planning tasks from the user (202) and/or for exchanging signals with the manufacturing equipment (208a, 208b) over the one or more communication connections.

The embodiments of the present disclosure provide an approach to plan and execute workflow processes in a manufacturing facility, while allowing for deviations from predefined states within acceptable limits and providing fallback strategies for situations where these limits are predicted to be exceeded. The embodiments of the present disclosure combine the advantages of offline generated plans (where no online optimization is needed and where the plans are known in advance) with the flexibility of online planning to efficiently manage and compensate for real-world scenarios of workflow processes in manufacturing facilities.

## Claims

1. A computer-implemented method (300) for generating an advanced plan for a workflow process executable by a control unit (310), comprising:
receiving (302) a planning task describing the workflow process;
generating (304), by one or more processors of a planning engine (204), based on the planning task, a nominal plan including a first plurality of procedures, each procedure including a predefined initial and final state;
generating (306), by the one or more processors of the planning engine (204), for each procedure of the first plurality of procedures in the nominal plan, a tolerance model defining acceptable deviations for each one of the predefined initial and final states;
generating (308), by the one or more processors of the planning engine (204), based on each tolerance model, at least one other plurality of procedures; and
adding (310), by the one or more processors of the planner engine (204), the at least one other plurality of procedures to the nominal plan to generate the advanced plan.

2. A computer-implemented method for executing an advanced plan generated according to the method of claim 1, comprising:
executing (314), by one or more processors of an execution engine (206), a first part of the advanced plan to perform a workflow process via a control unit (310); and
continuously monitoring (314), by the one or more processors of the execution engine (206), a current state of currently executed procedures in the first part of the advanced plan and potential state deviations of a second upcoming part of the advanced plan by predicting, in a receding horizon manner, whether the potential state deviations expected in the second upcoming part of the advanced plan are acceptable deviations.

3. The method of claim 1 or 2, wherein acceptable deviations comprise deviations from either the initial or the final state of each one of the procedures for which a plan is guaranteed to be successfully executed, and wherein the planning task includes one or more procedures to generate one or more preplanned fallback strategies.

4. The method of any of preceding claims, wherein the nominal plan includes thresholds up to which acceptable deviations are compensable by the control unit (210) in communication with equipment (208a, 208b) performing according to the workflow process, and wherein the thresholds are modelled by the tolerance models.

5. The method of any of the preceding claims, further comprising:
if the potential state deviations of the second upcoming part of the advanced plan are acceptable deviations, continue executing, by the one or more processors of the execution engine (206), the advanced plan; and
if the potential state deviations of the second upcoming part of the advanced plan are exceeding the acceptable deviations, executing, by the one or more processors of the execution engine (206), one or more corresponding preplanned fallback strategies.

6. The method of any of the preceding claims, wherein executing, by the one or more processors of the execution engine, the first part of the advanced plan to perform the workflow process, comprises sending, by the one or more processors of the execution engine (206), control commands to the control unit (210) coupled to the equipment (208a, 208b).

7. The method of any of the preceding claims, wherein continuously monitoring, by the one or more processors of the execution engine (206), the current state of currently executed procedures in the first part of the advanced plan and potential state deviations of the second upcoming part of the advanced plan, comprises receiving, by the one or more processors of the execution engine (206), from the control unit (210), measurements of parameters of the equipment (208a, 208b).

8. The method of any of the preceding claims, wherein the advanced plan comprises a different output structure than an output structure of the nominal plan.

9. The method of any of the preceding claims, wherein the pluralities of procedures comprise interconnected function blocks, FBs, relating input values to output values, the values being associated with and/or encoding the parameters of the equipment (208a, 208b).

10. The method of claim 9, wherein generating the advanced plan by the one or more processors of the planner engine (204) comprises:
analysing, by the one or more processors of the planner engine (204), deviations of input values and output values of each of the FBs in the nominal plan;
checking, by the one or more processors of the planner engine (204), whether the analysed deviations are acceptable deviations;
if the analysed deviations are acceptable deviations, generating, by the one or more processors of the planner engine (204), new FBs; and
adding, by the one or more processors of the planner engine (204), the new FBs between the FBs of the nominal plan to generate the advanced plan.

11. A system (200), comprising:
a control unit (210);
a plurality of machines (208a, 208b) coupled to the control unit (210) and each configured to perform a plurality of workflow processing steps according to a workflow process executable by the control unit (210);
one or more processors; and
a memory, the memory storing computer-readable instructions that, when executed by one or more of the processors, cause the one or more of the processors to:
receive (302) a planning task describing the workflow process; and
generate (304), based on the planning task, a nominal plan including a first plurality of procedures, each procedure including a predefined initial and final state;
generate (306), for each procedure of the first plurality of procedures in the nominal plan, a tolerance model defining acceptable deviations for each one of the predefined initial and final states;
generate (308) based on each tolerance model, at least one other plurality of procedures;
add (310) the at least one other plurality of procedures to the nominal plan to generate an advanced plan;
execute (312) a first part of the advanced plan to perform the workflow process; and
continuously monitor (314) a current state of currently executed procedures in the first part of the advanced plan and potential state deviations of a second upcoming part of the advanced plan by predicting, in a receding horizon manner, whether the potential state deviations expected in the second upcoming part of the advanced plan are acceptable deviations.

12. The system of claim 11, wherein acceptable deviations comprise deviations from either the initial or the final state of each one of the procedures for which a plan is guaranteed to be successfully executed, and wherein the planning task includes one or more procedures to generate one or more preplanned fallback strategies.

13. The system of any of the preceding claims, wherein the instructions further cause the one or more of the processors to perform the steps of the method according to any one of claims 3 to 10.

14. A computer-readable storage medium storing instructions which when executed by at least one processor, cause the at least one processor to perform the method according to any one of claims 1 to 10.

15. A computer program product comprising instructions which when executed by at least one processor, cause the at least one processor to perform the method according to any one of claims 1 to 10.
